# EUROPÄISCHE PATENTSCHRIFT

(11) **EP 2 582 581 B1**
(45) Veröffentlichungstag und Bekanntmachung des Hinweises auf die Patenterteilung: **04.06.2014**
(21) Anmeldenummer: 11785286.3
(22) Anmeldetag: 14.06.2011
(51) Int. Cl.: B64D 33/02, B64C 39/10, B64D 27/16

(54) **ANGETRIEBENES FLUGGERÄT, INSBESONDERE ALS NURFLÜGLER UND/ODER MIT GERINGER RADARSIGNATUR AUSGEBILDETES FLUGGERÄT**
DRIVEN AIRCRAFT, IN PARTICULAR AN AIRCRAFT DESIGNED AS A FLYING WING AND/OR HAVING A LOW RADAR SIGNATURE
AÉRONEF MOTORISÉ, EN PARTICULIER AÉRONEF RÉALISÉ SOUS FORME D'AILE VOLANTE ET/OU AVEC UNE FAIBLE SIGNATURE RADAR

(30) Priorität: 16.06.2010 DE 102010023938
(43) Veröffentlichungstag der Anmeldung: 24.04.2013
(73) Patentinhaber: EADS Deutschland GmbH, 85521 Ottobrunn (DE)
(72) Erfinder: BICHLER, Bartholomäus, 83064 Raubling (DE); DORNWALD, Jochen, 80807 München (DE); WEDEKIND, Gerhard, 88090 Immenstaad (DE)
(86) Internationale Anmeldenummer: PCT/DE2011/001218
(87) Internationale Veröffentlichungsnummer: WO 2012/010116

(56) Entgegenhaltungen:
- WO-A1-2006/049553
- WO-A1-2006/049555
- FR-A1- 2 888 211

## Beschreibung

Die vorliegende Erfindung betrifft ein angetriebenes Fluggerät nach dem Oberbegriff des Anspruchs 1, also mit einem Rumpf- und Tragflügelkorpus, einem Strahltriebwerk und wenigstens einer Antriebsströmungspassage, die von einem an der Korpusoberfläche nach vorne gerichteten Lufteinlauf über das Strahltriebwerk durch den Korpus hindurch zu einer an der Korpusoberfläche nach hinten ausmündenden Schubdüse verläuft.

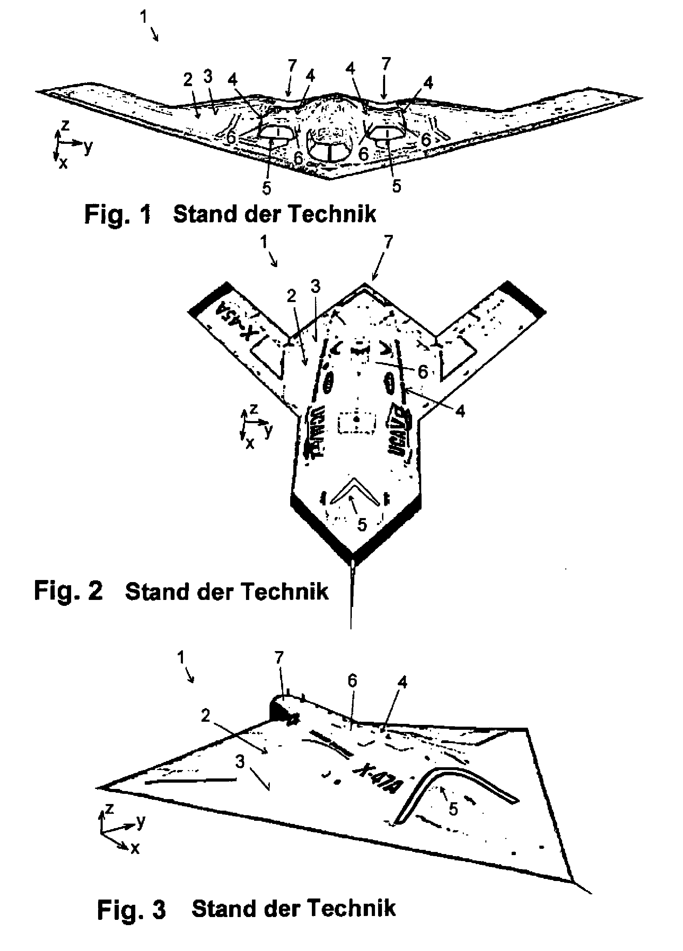

Als Beispiele derartiger gattungsgemäßer Fluggeräte seien hier der strategische Langstreckenbomber "Northrop B-2 Spirit" (Fig. 1) sowie die unbemannten Experimentalkampfflugzeuge (englisch: unmanned combat air vehicle, UCAV) "Boeing X-45" (Fig. 2) und "Northrop Grumman X-47 Pegasus" (Fig. 3) genannt. Die vorstehenden Fluggerätbezeichnungen und Darstellungen (Fig. 1 bis 3) wurden bei einer Recherche im Mai 2010 im Internet aufgefunden.

Derartige Fluggeräte sind ferner aus den Patentveröffentlichungen WO 2006/049553 A1, FR 2 888 211 A1 und WO 2006/049555 A1 bekannt.

Diesen vorstehend lediglich beispielhaft genannten Fluggeräten ist gemein, dass diese zwei im Zusammenhang miteinander stehende Besonderheiten aufweisen, nämlich zum einen eine mehr oder weniger "minimalistische" Formgestaltung eines Rumpf- und Tragflügelkorpus (entsprechend dem so genannten Nurflüglerprinzip) und zum anderen eine geringe Radarsignatur.

Eine niedrige Radarsignatur, gleichbedeutend mit einer niedrigen Wahrscheinlichkeit für eine Entdeckung des Fluggerätes mittels Radar, kann z. B. durch energieabsorbierende Anstriche, energieleitende Abdichtungen von Außenhautfugen, weniger und größere statt viele kleine Wartungsklappen, Unterbringung von Lasten in innenliegenden Schächten anstatt als Außenlasten und weitere Maßnahmen bewerkstelligt bzw. gefördert werden.

Insbesondere muss ein Fluggerät, das nur eine extrem geringe Radarsignatur aufweisen soll, eine sehr simple Außengeometrie mit einer Vermeidung bzw. gezielten Ausrichtung von Korpusflächen und -kanten aufweisen. Ungünstig angeordnete Flächen wie z. B. vertikal ausgerichtete Seitenleitwerksflächen verursachen soviel Radarrückstreuung, dass eine extrem niedrige Signatur nicht mehr erreichbar ist. Aus diesem Grund ergibt sich hinsichtlich einer geringen Radarsignatur ein überragender Vorteil bei einer Formgestaltung des Rumpf- und Tragflügelkorpus, die wenigstens annähernd dem Nurflüglerprinzip folgt und somit keinen besonders ausgeprägten Rumpf bzw. einen fließenden Übergang zwischen Rumpf und Tragflügeln besitzt.

Eine signaturmäßig besonders günstige Grundgeometrie scheint eine einfache Deltakonfiguration mit einer bestimmten Hinterkantenpfeilung zu sein, die keinen ausgeprägten Rumpf besitzt, und nach Möglichkeit abwickelbar sein sollte. Zwar kommt auch eine Hinterkante mit Zacken in Betracht, wie z. B. bei einem Korpus mit Tragflügeln in so genannter Lamdakonfiguration (vgl. z. B. Fig. 1 und 2). Jedoch ergibt sich bei einer solchen Lamdakonfiguration bereits eine gewisse Verschlechterung hinsichtlich der Radarsignatur. Zur Erzielung einer extrem geringen Radarsignatur ist daher eine einfache Deltakonfiguration (vgl. z. B. Fig. 3) eine wesentlich bessere Lösung.

Die vorstehend erläuterte und zur Erzielung einer geringen Radarsignatur vorteilhafte wenn nicht unabdingbare Formgestaltung bzw. Grundgeometrie des Fluggerätkorpus (insbesondere z. B. nach Art wie in Fig. 3 ersichtlich) besitzt zumeist den Nachteil gravierend verschlechteter Flugeigenschaften bis hin zu einem aerodynamisch instabilen Flugverhalten. Hintergrund ist der, dass bei diesen Korpusgestaltungen der so genannte aerodynamische Neutralpunkt in Flugrichtung betrachtet relativ weit vorne liegt. Unter Berücksichtigung des Erfordernisses, dass der Massenschwerpunkt des Fluggerätes somit ebenfalls relativ weit vorne liegen muss, ist es schwierig, das (vor allem im hinteren Bereich reichlich zur Verfügung stehende) Volumen des Fluggerätkorpus gut auszunutzen, weil man vordere Bereiche möglichst mit Komponenten hoher Dichte (wie z. B. Triebwerk(en), Waffenschächte(n), Ausrüstung, Kraftstofftank(s) etc.) füllen müsste, wohingegen man hintere Bereiche mit Komponenten geringerer Dichte (wie z. B. Luftleitungen, Düsenrohren etc.) füllen müsste. Dies ist in der Praxis jedoch nicht so einfach möglich, weil hierfür im vorderen Korpusbereich zu wenig Platz zur Verfügung steht und die einzelnen Komponenten selbstverständlich nicht völlig beliebig im Korpus verteilt werden können.

Ein damit in Zusammenhang stehendes besonderes Problem ergibt sich bei bekannten Fluggeräten der eingangs genannten Art hinsichtlich des Antriebes mittels einer ausgehend von einem Lufteinlauf über ein Strahltriebwerk durch den Korpus hindurch zu einer Schubdüse verlaufenden Antriebsströmungspassage.

Bei den bekannten Fluggeräten verlaufen eine oder mehrere dieser Antriebsströmungspassagen entgegen der Flugrichtung durch den Fluggerätkorpus. Wenn nun das (relativ dichte) Triebwerk aus den oben genannten Gründen relativ weit vorne angeordnet wird, so befindet sich dementsprechend der Lufteinlauf ebenfalls relativ weit vorne, was jedoch einer geringen Radarsignatur äußerst abträglich ist. Hinsichtlich einer geringen Radarsignatur sind vorn liegende Lufteinläufe insofern eine höchstproblematische Komponente, da die damit gebildeten Kavitäten dazu neigen, einfallende Radarwellen in einem sehr weiten Aspektbereich wieder abzustrahlen. Ein von vorne auf das Triebwerk "geworfener Radarblick" ist auch deshalb kritisch, weil rotierende Triebwerkskomponenten zu einer Modulation des reflektierten Radarsignals führen und auf diese Weise eine Erkennung des Fluggerätes (samt Identifizierung des Fluggerättyps) ermöglichen können.

Ein weiteres inhärentes Problem von Lufteinläufen ist, dass diese unter Schiebewinkeln eine Seitenkraft erzeugen, welche von der Form des Einlaufes und dem Massendurchsatz der sich anschießenden Antriebsströmungspassage abhängt. Insbesondere relativ weit vorne eingebaute Lufteinläufe erzeugen somit im Schiebeflug ein das Fluggerät destabilisierendes Giermoment, das irgendwie ausgeglichen werden muss und insbesondere bei einem fehlenden Seitenleitwerk zu gravierenden Problemen hinsichtlich der Flugstabilität führen kann.

Es ist eine Aufgabe der vorliegenden Erfindung, bei einem Fluggerät der eingangs genannten Art eine größere Gestaltungsfreiheit hinsichtlich der Formgestaltung des Korpus zu ermöglichen, insbesondere einen Korpus nach Art eines Nurflüglers mit gegenüber bekannten Fluggeräten verbesserten Flugeigenschaften zu ermöglichen, und/oder eine Verringerung der Radarsignatur des Fluggerätes zu erzielen.

Das erfindungsgemäße Fluggerät ist dadurch gekennzeichnet, dass wenigstens ein Teil des Strahltriebwerkes, insbesondere das ganze Strahltriebwerk, in Flugrichtung des Fluggerätes betrachtet vor dem Lufteinlauf angeordnet ist und die Antriebsströmungspassage hierfür geeignet ausgebildete und angeordnete Krümmungsabschnitte aufweist.

Die Grundidee der Erfindung besteht darin, die herkömmliche relative Anordnung von Lufteinlauf und Strahltriebwerk aufzugeben und die Positionen dieser Komponenten voneinander zu "entkoppeln". Gegenüber herkömmlichen Fluggeräten ist bei dem erfindungsgemäßen Fluggerät das Strahltriebwerk nach vorne und/oder der Lufteinlauf nach hinten verlagert.

Vorteilhaft kann damit der Massenschwerpunkt des Fluggerätes nach vorne verlagert werden, was insbesondere für einen Rumpf- und Tragflügelkorpus mit relativ weit vorne liegendem aerodynamischen Neutralpunkt die Flugstabilität erhöht (bzw. Fluginstabilität verringert). Mit der Erfindung sind somit die Stabilitätsprobleme derartiger Korpusgestaltungen erheblich entschärft.

Gemäß einer diesbezüglich interessanten Ausführungsform ist beispielsweise vorgesehen, dass der Korpus im Wesentlichen mit einer Nurflügler-Formgestaltung ausgebildet ist. In einer spezielleren Ausführungsform verlaufen die vorderen Tragflügelkanten (bevorzugt jeweils im Wesentlichen geradlinig) mit positiver Pfeilung (bevorzugt wenigstens 40°) bis zu einem Bug des Fluggerätes und verlaufen die hinteren Tragflügelkanten (bevorzugt jeweils im Wesentlichen geradlinig) mit einer negativen Pfeilung (bevorzugt im Bereich zwischen 10° und 30°) bis zu einem Heck des Fluggerätes.

Prinzipiell können bei der Erfindung die Positionen des Strahltriebwerkes und des Lufteinlaufes nahezu beliebig gewählt bzw. an die gewünschten aerodynamischen und/oder radarsignaturmäßigen Eigenschaften des Fluggerätes angepasst werden. Bei vorgegebenen Positionen von Strahltriebwerk und Lufteinlauf kann dann eine diese Komponenten verbindende Strömungspassage sowie eine den Triebwerksausgang mit der Schubdüse verbindende Strömungspassage festgelegt werden. Der genaue Verlauf dieser Strömungspassagen ist in gewissen Grenzen frei wählbar. Prinzipiell sind lediglich die Positionen des Lufteinlaufes, des Strahltriebwerkes und der Schubdüse als "Fixpunkte" dieser Strömungspassagen zu berücksichtigen.

Da wenigstens ein Teil des Strahltriebwerkes in Flugrichtung des Fluggerätes betrachtet vor dem Lufteinlauf angeordnet ist, muss die Antriebsströmungspassage wenigstens zwei Krümmungsabschnitte zur Strömungsumlenkung aufweisen:
Mindestens ein Krümmungsabschnitt ist erforderlich, um die einlaufende Luft einem Eingang (z. B. Verdichterstufe) des Strahltriebwerkes zuzuführen. Falls das Strahltriebwerk hierbei in "normaler Einbaulage", also mit Schubrichtung entgegen der Flugrichtung vorgesehen ist, so sind im Bereich dieser Zufuhrströmungspassage bereits zwei Krümmungsabschnitte erforderlich. Ein weiterer Krümmungsabschnitt in der Passage zwischen Strahltriebwerk und Schubdüse kann erforderlich sein, falls das Strahltriebwerk nicht exakt in Flugrichtung (genauer gesagt: antiparallel zur gewünschten Schubrichtung) eingebaut ist.

Falls das Strahltriebwerk jedoch in "umgedrehter Einbaulage", also mit dem Triebwerksausgang (z. B. Brennkammer, gegebenenfalls mit Nachbrenner) nach vorne orientiert ist, so genügt bereits ein Krümmungsabschnitt, um die einlaufende Luft dem Triebwerkseingang zuzuführen. Allerdings ist in diesem Fall wenigstens ein zweiter Krümmungsabschnitt in der Strömungspassage zwischen Triebwerksausgang und Schubdüse erforderlich.

Es versteht sich, dass die Krümmungsabschnitte (wie auch die übrigen Abschnitte) der Antriebsströmungspassage möglichst strömungsoptimiert, also mit geringem Strömungswiderstand ausgebildet und angeordnet sein sollten.

In einer Ausführungsform ist vorgesehen, dass wenigstens einer, insbesondere sämtliche Krümmungsabschnitte der Antriebsströmungspassage eine Strömungsumlenkung um im Wesentlichen 180° vorsehen. Darunter sollen insbesondere Umlenkungswinkel im Bereich von 160° bis 200°, beispielsweise im Bereich von 170° bis 190° fallen. Die Krümmung des von einem Krümmungsabschnitt bewirkten Strömungsverlaufes kann einachsig oder zweiachsig vorgesehen sein.

Weitere Vorteile der Erfindung ergeben sich durch die damit ermöglichte Verlagerung der Position des Lufteinlaufes nach hinten. Aufgrund der zwischen einem solchen Lufteinlauf und dem (relativ weit vorne angeordneten) Strahltriebwerk befindlichen und relativ leichten (wenig dichten) Strömungspassage wird die vorteilhafte Vorverlagerung des Massenschwerpunkts begünstigt. Darüber hinaus kann mit relativ weit hinten angeordneten Lufteinläufen die eingangs erwähnte Problematik der Erzeugung von instabilen Giermomenten entschärft werden. Für den Fall, dass ein Lufteinlauf in der Mitte der Querausdehnung des Fluggerätes vorgesehen ist, gilt analoges für ein ansonsten möglicherweise destabilisierendes Nickmoment.

In einer Ausführungsform ist vorgesehen, dass die Korpusoberfläche eine die Radarsignatur des Fluggerätes reduzierende Formgestaltung besitzt. In dieser Hinsicht sind insbesondere Formgestaltungen gemäß eines Nurflüglerkonzeptes und/oder mit Tragflügeln in (bevorzugt) Delta- oder (weniger bevorzugt) Lamdageometrie vorteilhaft.

Eine "die Radarsignatur reduzierende" Formgestaltung soll insbesondere dann vorliegen, wenn zumindest für den (besonders kritischen) vorderen Aspektbereich, also bei einem "Radarblick von vorne" eine Signatur vorliegt, die einer Radarrückstreufläche von weniger als 10 %, insbesondere weniger als 1 % derjenigen Fläche entspricht, die sich bei einer herkömmlichen Formgestaltung eines Fluggerätes derselben Größe und Grundgeometrie ergeben würde.

In dieser Hinsicht bietet die gemäß der Erfindung ermöglichte Verlagerung von Lufteinläufen nach hinten den gravierenden weiteren Vorteil, dass derartige Lufteinläufe zumindest im vorderen Aspektbereich nurmehr schwer wenn überhaupt mittels Radar zu erkennen sind. Weiterhin wird durch den im Verlauf der Lufteinströmungspassage vorhandenen Krümmungsabschnitt ein direkter Radareinblick auf das Strahltriebwerk auch dann effektiv verwehrt, wenn der Lufteinlauf vom Radargerät aus einsehbar ist. Der bei der Erfindung vorgesehene (wenigstens eine) Krümmungsabschnitt besitzt in dieser Hinsicht gewissermaßen einen zusätzlichen Nutzen.

In einer Ausführungsform ist vorgesehen, dass der Lufteinlauf in Flugrichtung betrachtet hinter dem Massenschwerpunkt des Fluggerätes und/oder hinter dem geometrischen Flächenschwerpunkt der von oben betrachteten Kontur des Korpus angeordnet ist. Damit können besonders große Vorteile hinsichtlich der Flugstabilität und der niedrigen Radarsignatur erzielt werden.

In einer Ausführungsform ist vorgesehen, dass die Mündung des Lufteinlaufes auf ihrer Außenseite von einem nach vorne sich verjüngenden, beispielsweise spitz zulaufenden Bereich des Korpus begrenzt ist. Dies stellt zum einen eine für eine niedrige Radarsignatur des Lufteinlaufes manchmal günstige Formgestaltung dar. Darüber hinaus kann diese Gestaltung strömungstechnische Vorteile im Hinblick auf einen möglichst effizienten Lufteinlauf besitzen. Der sich nach hinten verbreiternde Korpusbereich liefert eine gewisse "Lauflänge" für die einströmende Luft, bevor diese den z. B. relativ knapp hinter dem Lufteinlauf angeordneten Krümmungsabschnitt der Antriebsströmungspassage erreicht.

In einer Ausführungsform ist vorgesehen, dass die Antriebsströmungspassage wenigstens zum Teil zweifach, symmetrisch zu einer vertikalen Längsmittelebene des Korpus ausgebildet ist. Alternativ zur "zweifachen" Ausbildung kommt auch eine dreifache, vierfache usw. Ausbildung in Betracht.

In einer Ausführungsvariante sind mehrere Antriebsströmungspassagen einschließlich zugehöriger Lufteinläufe, Strahltriebwerke und evtl. auch Schubdüsen völlig separat voneinander angeordnet.

In einer anderen Ausführungsvariante wird wenigstens ein Lufteinlauf und/oder wenigstens ein Abschnitt einer Strömungspassage und/oder wenigstens ein Strahltriebwerk und/oder wenigstens eine Schubdüse als gemeinsame Komponente für zwei (oder mehr) solche Antriebsströmungspassagen verwendet. Dies kann in einfacher Weise durch geeignet angeordnete Verzweigungen und/oder Zusammenführungen im Bereich von Strömungspassagen realisiert werden.

Gemäß einer Ausführungsform der Antriebsströmungspassage (von der wie vorstehend erläutert auch mehrere im Fluggerät untergebracht sein können), umfasst diese:
- einen sich an den Lufteinlauf anschießenden ersten Krümmungsabschnitt zur Strömungsumlenkung,
- einen sich an den ersten Krümmungsabschnitt anschließenden und in Flugrichtung erstreckenden ersten Längsabschnitt zur Strömungsführung in Flugrichtung,
- einen sich an den ersten Längsabschnitt anschließenden zweiten Krümmungsabschnitt zur Strömungsumlenkung, und
- einen sich an den zweiten Krümmungsabschnitt anschließenden und entgegen der Flugrichtung erstreckenden zweiten Längsabschnitt zur Strömungsführung entgegen der Flugrichtung.

Der Begriff "in Flugrichtung erstreckender Abschnitt" soll hierbei bedeuten, dass der betreffende Abschnitt eine gewisse Distanz in Flugrichtung betrachtet überbrückt. Hierzu ist es nicht zwingend erforderlich, dass der betreffende Abschnitt (exakt) parallel zur Flugrichtung verläuft. Vielmehr ist auch ein Verlauf in einem Winkel zur Flugrichtung bzw. Längsrichtung des Fluggerätes denkbar, wobei ein derartiger Winkel jedoch bevorzugt relativ klein ist (z. B. kleiner als 30°, insbesondere kleiner als 20°). In einer speziellen Ausführungsform verläuft der erste Längsabschnitt und/oder der zweite Längsabschnitt im Wesentlichen geradlinig. In einer speziellen Weiterbildung dieser Ausführungsform besitzt die Antriebsströmungspassage hierbei zwei Krümmungsabschnitte, die jeweils eine Strömungsumlenkung um etwa 180° (z. B. im Bereich von 170° bis 190°) vorsehen.

Auch für die konkrete Anordnung bzw. Orientierung des Strahltriebwerkes gibt es verschiedene Möglichkeiten. In einer bevorzugten Ausführungsvariante der vorstehend erwähnten Ausführung mit ersten und zweiten Längsabschnitten und ersten und zweiten Krümmungsabschnitten ist beispielsweise vorgesehen, dass der erste Längsabschnitt das Strahltriebwerk enthält. Der Vorteil gegenüber einer Anordnung des Strahltriebwerkes z. B. im zweiten Längsabschnitt besteht darin, dass die im Verlauf hinter dem Strahltriebwerk entstehenden Strömungsverluste besser "handhabbar" (durch höhere Triebwerksleistung kompensierbar) sind als Strömungsverluste bzw. ein hoher Strömungswiderstand vor dem Triebwerkseingang.

In einer Ausführungsform ist vorgesehen, dass wenigstens ein Teil des Strahltriebwerkes, insbesondere das ganze Strahltriebwerk, in Flugrichtung betrachtet vor dem Massenschwerpunkt des Fluggerätes und/oder vor dem geometrischen Flächenschwerpunkt der von oben betrachteten Kontur des Korpus angeordnet ist. Dies ermöglicht eine besonders weitgehende Verbesserung der Flugeigenschaften bei ansonsten problematischen Formgestaltungen des Rumpf- und Tragflügelkorpus.

Eine bevorzugte Vewendung eines Fluggerätes der hier beschriebenen Art ist der Einsatz als unbemanntes Aufklärungs- und/oder Kampfflugzeug (UAV bzw. UCAV), insbesondere mit einer die Radarsignatur sehr weitgehend (z. B. um mehr als 99 %) verringernden Korpusgeometrie.

Die Erfindung wird nachfolgend anhand von Ausführungsbeispielen mit Bezug auf die beigefügten Zeichnungen weiter beschrieben. Es stellen dar:
- Fig. 1: ein Fluggerät (Northrop B-2 Spirit) nach dem Stand der Technik,
- Fig. 2: ein weiteres Fluggerät (Boeing X-45) nach dem Stand der Technik,
- Fig. 3: ein weiteres Fluggerät (Northrop Grumman X-47 Pegasus) nach dem Stand der Technik,

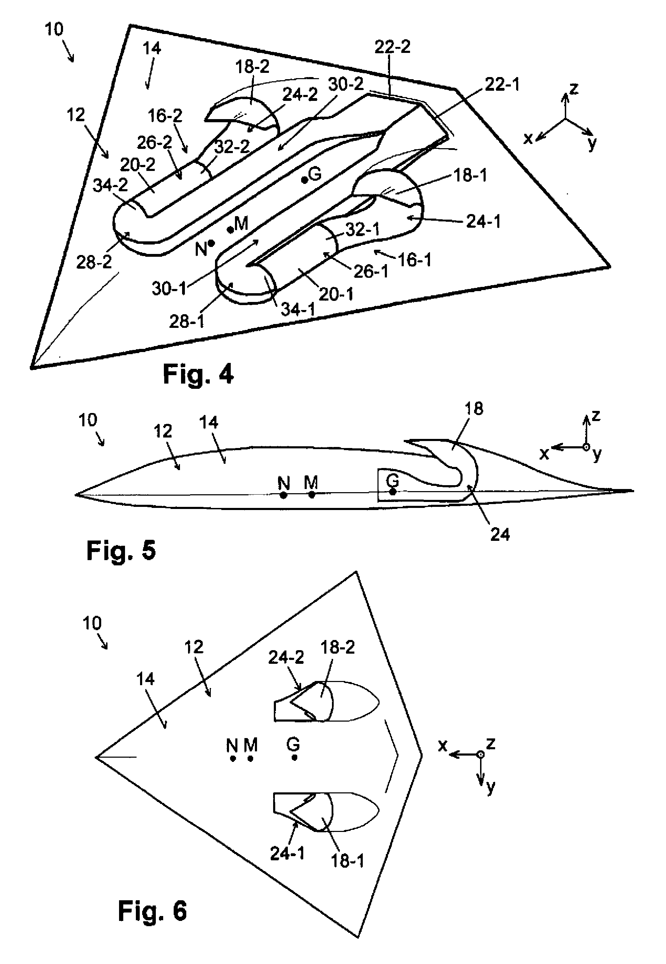

- Fig. 4: ein Fluggerät gemäß eines Ausführungsbeispiels der Erfindung,
- Fig. 5: das Fluggerät von Fig. 4 mit einem hervorgehobenen Detail in Seitenansicht,
- Fig. 6: das Fluggerät von Fig. 4 mit einem hervorgehobenen Detail in Draufsicht,

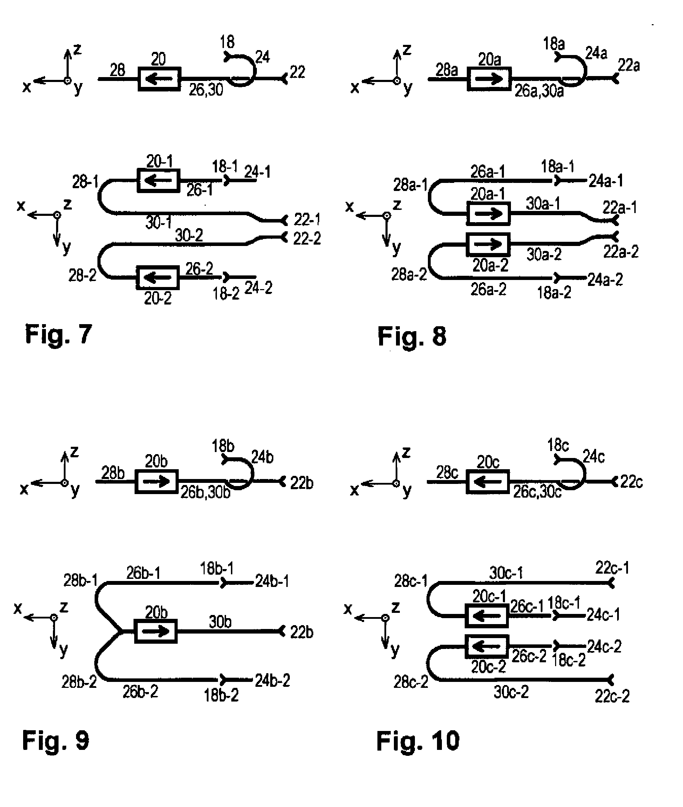

- Fig. 7: eine schematische Darstellung der Gestaltungsgeometrie von Antriebsströmungspassagen bei dem Fluggerät von Fig. 4,
- Fig. 8: eine der Fig. 7 entsprechende Darstellung gemäß eines modifizierten Ausführungsbeispiels,
- Fig. 9: eine der Fig. 7 entsprechende Darstellung gemäß eines weiteren modifizierten Ausführungsbeispiels, und
- Fig. 10: eine der Fig. 7 entsprechende Darstellung gemäß eines weiteren modifizierten Ausführungsbeispiels.

Die Fig. 1 bis 3 zeigen einige Beispiele von aus dem Stand der Technik bekannten Fluggeräten der hier interessierenden Art.

Jedes dieser Fluggeräte 1 umfasst einen Rumpf- und Tragflügelkorpus 2 mit einer Korpusoberfläche 3. Ferner umfasst jedes Fluggerät 1 wenigstens eine Antriebsströmungspassage 4, welche von einem an der Korpusoberfläche 3 nach vorne (positive x-Richtung) gerichteten Lufteinlauf 5 über ein Strahltriebwerk 6 durch den Korpus 2 hindurch zu einer an der Korpusoberfläche 3 nach hinten ausmündenden Schubdüse 7 verläuft.

Wie aus den Fig. 1 bis 3 ersichtlich, ist der Korpus 2 jeweils nach Art eines "Nurflüglers" ausgebildet - mit fließenden Übergängen zwischen einem kaum erkennbaren Rumpf und zu beiden Seiten davon angeordneten Tragflügeln. Diese besondere Formgestaltung des Korpus 2 dient einer mehr oder weniger drastischen Verringerung der Radarsignatur des jeweiligen Fluggerätes 1. In diesem Zusammenhang sind auch die ungewöhnliche Vorderkantenpfeilung und Hinterkantenpfeilung bzw. eine W-förmige Zackung der Hinterkante (Fig. 1 und 2) von Bedeutung. Damit werden von vorne oder hinten auf das jeweilige Fluggerät 1 auftreffende Radarwellen nicht nach vorne bzw. hinten zurückreflektiert sondern seitwärts (in sehr engen Winkelbereichen) reflektiert. Zur Erzielung einer extrem geringen Radarsignatur ist jedoch eine Deltakonfiguration (Fig. 3) im Allgemeinen den anderen Formgestaltungen überlegen.

Die in den Figuren eingezeichneten Koordinatensysteme bezeichnen eine Flugrichtung bzw. Längsrichtung "x", eine Querrichtung "y" und eine Hochrichtung "z" des jeweiligen Fluggerätes.

Ein gravierendes Problem bei dem in Fig. 3 dargestellten Fluggerät 1 (mit einer "Delta-Grundform") besteht darin, dass der so genannte aerodynamische Neutralpunkt in Flugrichtung (x-Richtung) betrachtet relativ weit vor dem Volumenschwerpunkt liegt. Die Lage des aerodynamischen Neutralpunktes wird hierbei durch die besondere Formgestaltung des Korpus 2 bedingt, wohingegen die Lage des Massenschwerpunktes maßgeblich durch die Unterbringung relativ dichter Komponenten wie dem Strahtriebwerk 6 und Treibstoffvorräten in einem mittleren und hinteren Korpusbereich bedingt ist. Zu bedenken ist hierbei, dass das Strahltriebwerk 6 hinter dem zugeordneten Lufteinlauf 5 anzuordnen ist und der Lufteinlauf 5 wiederum nicht besonders weit vorne angeordnet ist, da die von diesem Lufteinlauf 5 gebildeten Diskontinuitäten der Korpusoberfläche 3 ansonsten durch einen von vorne auf das Fluggerät 1 "geworfenen Radarblick" relativ gut erkennbar wären.

Die bei den Fluggeräten 1 der Fig. 1 bis 3 ersichtliche Anordnung der Lufteinläufe 5 auf der Oberseite des jeweiligen Korpus 2 führt zwar zu einer Verdeckung derselben für Radarstrahlung, die z. B. ausgehend von einem Bodenradar von schräg unten auf das Fluggerät 1 auftrifft. Eine solche Verdeckung ergibt sich jedoch nicht für horizontal oder schräg von oben einfallende Radarstrahlung (z. B. von einem luftgestützten Radarsystem ausgesandt).

Eine hinsichtlich des Massenschwerpunktes sehr nachteilige Vergrößerung der in x-Richtung betrachteten Distanz zwischen Lufteinlauf 5 und Strahltriebwerk 6 ergibt sich bei den dargestellten Fluggeräten 1 dadurch, dass unmittelbar hinter den Mündungen der Lufteinläufe 5 siphonartig gekrümmte Bereiche mit relativ großer Baulänge vorgesehen sind, um einen direkten Radareinblick auf das Triebwerk 6 zu verwehren.

Die sehr ungünstigen Flugeigenschaften von Fluggeräten der dargestellten Art haben Fluginstabilitäten zur Folge, die vereinfacht ausgedrückt mit denjenigen eines Dartpfeils vergleichbar sind, der "verkehrt herum" geworfen wurde. Dementsprechend würden die dargestellten Fluggeräte 1 abstürzen, wenn nicht durch eine aufwändige Avionik permanent die Fluglage korrigiert würde. Hierfür müssen permanent geeignete Steuerbefehle an die hierfür vorgesehenen Komponenten (z. B. verstellbare Steuerflächen an den Tragflächen etc.) ausgegeben werden.

Nachfolgend werden mit Bezug auf die Fig. 4 bis 10 einige Ausführungsbeispiele von demgegenüber hinsichtlich der Flugeigenschaften und/oder hinsichtlich einer niedrigen Radarsignatur verbesserten Fluggeräten beschrieben.

Fig. 4 veranschaulicht ein Fluggerät 10 (z. B. unbemanntes Flugzeug), welches wie die oben bereits beschriebenen bekannten Fluggeräte einen Rumpf- und Tragflügelkorpus 12 mit einer Korpusoberfläche 14 und wenigstens eine Antriebsströmungspassage, hier die zwei Antriebsströmungspassagen 16-1 und 16-2 aufweist.

Die beiden Antriebsströmungspassagen 16-1, 16-2 sind symmetrisch zu einer vertikalen Längsmittelebene des Korpus 12 angeordnet. Im Folgenden wird daher lediglich der Aufbau der (linken) Antriebsströmungspassage 16-1 genauer erläutert. Die andere (rechte) Antriebsströmungspassage 16-2 besitzt einen gleichartigen Aufbau.

Die Antriebsströmungspassage 16-1 verläuft ausgehend von einem an der Korpusoberfläche 14 nach vorne (x-Richtung) gerichteten Lufteinlauf 18-1 über ein Strahltriebwerk 20-1 zu einer an der Korpusoberfläche 14 nach hinten ausmündenden Schubdüse 22-1.

Die Bezugszahlen von in einer Ausführungsform mehrfach vorgesehenen, in ihrer Wirkung jedoch analogen Komponenten, wie z. B. der erwähnten Lufteinläufe, Triebwerke etc., sind durchnumeriert (jeweils ergänzt durch einen Bindestrich und eine fortlaufende Zahl). Auf einzelne solcher Komponenten oder auf die Gesamtheit solcher Komponenten wird im Folgenden auch durch die nicht-ergänzte Bezugszahl Bezug genommen.

Eine Besonderheit des Fluggerätes 10 besteht darin, dass das Strahltriebwerk 20-1 in Flugrichtung x betrachtet vor (und nicht hinter) dem zugeordneten Lufteinlauf 18-1 angeordnet ist und die Antriebsströmungspassage 16-1 hierfür geeignet ausgebildete und angeordnete Krümmungsabschnitte aufweist. Bei dem dargestellten Ausführungsbeispiel umfasst die Antriebsströmungspassage 16-1:
- einen sich an den Lufteinlauf 18-1 anschießenden ersten Krümmungsabschnitt 24-1 zur Strömungsumlenkung, wobei hier eine einachsige Strömungsumlenkung um 180°, in der vertikalen x-z-Ebene, vorgesehen ist,
- einen sich an den ersten Krümmungsabschnitt 24-1 anschließenden und in Flugrichtung (positive x-Richtung) erstreckenden ersten Längsabschnitt 26-1 zur Strömungsführung in Flugrichtung, wobei hier ein Verlauf mehr oder weniger exakt in x-Richtung vorgesehen ist und dieser erste Längsabschnitt 26-1 das Strahltriebwerk 20-1 enthält, dessen Erstreckung im Wesentlichen die gesamte Baulänge des Abschnittes 26-1 beansprucht,
- einen sich an den ersten Längsabschnitt 26-1 anschließenden zweiten Krümmungsabschnitt 28-1 zur Strömungsumlenkung, wobei hier ebenfalls eine Umlenkung um 180°, allerdings in der horizontalen x-y-Ebene, vorgesehen ist,
- einen sich an den zweiten Krümmungsabschnitt 28-1 anschließenden und entgegen der Flugrichtung (negative x-Richtung) erstreckenden zweiten Längsabschnitt 30-1 zur Strömungsführung entgegen der Flugrichtung, wobei hier wie für den ersten Längsabschnitt ein Verlauf im Wesentlichen exakt in (negativer) x-Richtung vorgesehen ist, so dass die beiden Längsabschnitte 26-1 und 30-1 in Querrichtung y betrachtet nebeneinander, und parallel bzw. antiparallel zur positiven x-Richtung verlaufen.

Vorteilhaft liegt der Massenschwerpunkt M des Fluggerätes 10 relativ weit vorne und somit nahe dem aerodynamischen Neutralpunkt N. Daraus resultieren erheblich verbesserte Flugeigenschaften bzw. eine höhere Stabilität für den gemäß einer Nurflügler-Formgestaltung ausgebildeten Korpus 12. In dieser Hinsicht vorteilhaft ist darüber hinaus die Verlagerung der Lufteinläufe 18 relativ weit nach hinten. Dies vermindert etwaig auftretende unerwünschte Giermomente, insbesondere unter Schiebewinkeln. In Fig. 4 ist außerdem die Lage des geometrischen Flächenschwerpunkts der von oben betrachteten Kontur des Korpus 12 eingezeichnet und mit G bezeichnet.

Die Formgestaltung des Korpus 12 dient im dargestellten Ausführungsbeispiel zur Reduzierung der Radarsignatur des Fluggerätes 10. In diesem Zusammenhang ist die Anordnung der Lufteinläufe 18 ebenfalls höchst vorteilhaft, da diese durch weiter vorne liegende Korpusbereiche besser gegenüber Radarstrahlung verdeckt sind, und ein direkter Radareinblick auf das Strahltriebwerk 20-1 sehr effektiv verhindert wird (durch den Krümmungsabschnitt 24-1).

Das dargestellte Fluggerät 10 mit nach hinten verlagerten Lufteinläufen 18 und dem "umgedrehten Triebwerkseinbau" beseitigt daher in eleganter Weise die eingangs erläuterten Probleme von Fluggeräten nach dem Stand der Technik.

Diese Vorteile ergeben sich bereits dann, wenn wenigstens ein Teil des Strahltriebwerkes 20 vor dem Lufteinlauf 18 angeordnet ist. Abweichend von der Darstellung gemäß Fig. 4 könnte also z. B. der Lufteinlauf 18 relativ zum Strahltriebwerk 20 auch weiter vorne angeordnet werden, bis hin in einen Bereich (in x-Richtung betrachtet) zwischen einem Triebwerkseingang 32 und einem Triebwerksausgang 34. Besser ist im Allgemeinen jedoch eine Anordnung, wie dargestellt, bei welcher das gesamte Triebwerk 20 vor dem Lufteinlauf 18 angeordnet ist.

Der Begriff "Strahltriebwerk" soll hier (in Abgrenzung zu den übrigen Abschnitten der Antriebsströmungspassage) diejenigen Bereiche bezeichnen, in welchen die zur Beschleunigung des Strömungsmediums (Luft bzw. Verbrennungsprodukte) bei dem betreffenden Triebwerkstyp erforderlichen Komponenten untergebracht sind. Bei einem gängigen Triebwerkstyp sind dies wenigstens eine Kompressor- bzw. Verdichterstufe, eine darauffolgende Brennkammer und eine sich schließlich noch anschließende Turbine (zum Antrieb der wenigstens einen Kompressor- bzw. Verdichterstufe).

Bei dem dargestellten Ausführungsbeispiel befindet sich der Lufteinlauf 18 sehr vorteilhaft sowohl hinter dem Massenschwerpunkt M als auch (knapp) hinter dem geometrischen Flächenschwerpunkt G.

Demgegenüber befindet sich das Strahltriebwerk 20 bei dem dargestellten Ausführungsbeispiel vollständig vor dem geometrischen Flächenschwerpunkt G und wenigstens ein Teil des Strahltriebwerkes 20 vor dem Massenschwerpunkt M. Abweichend von der Darstellung gemäß Fig. 4, bei welcher die Antriebsströmungspassage zweifach (einzelne Antriebsströmungspassagen 16-1 und 16-2), symmetrisch zur vertikalen Längsmittelebene des Korpus 12 ausgebildet ist, könnten auch eine oder mehrere Antriebsströmungspassagen asymmetrisch zur vertikalen Längsmittelebene angeordnet werden.

Ebenfalls abweichend von der Darstellung gemäß Fig. 4 könnte also z. B. auch nur eine einzige Antriebsströmungspassage, (bevorzugt) symmetrisch oder (weniger bevorzugt) asymmetrisch, zur vertikalen Längsmittelebene vorgesehen sein. Zur Schaffung einer Symmetrie können die ersten und zweiten Krümmungsabschnitte 24 und 28 jeweils gekrümmte Strömungsverläufe in der x-z-Ebene vorsehen. Eine solche mittig angeordnete Antriebsströmungspassage könnte darüber hinaus z. B. mit wenigstens einem Paar von symmetrisch zueinander, außermittig angeordneten Antriebsströmungspassagen (z. B. wie in Fig. 4 dargestellt) kombiniert werden.

Weitere mögliche Modifikationen der in Fig. 4 nur beispielhaft dargestellten Anordnungsgeometrie bzw. -topologie ergeben sich z. B. aus den weiter unten noch gegebenen Erläuterungen im Zusammenhang mit den Fig. 7 bis 10.

Die Fig. 5 und 6 veranschaulichen nochmals in einer Seitenansicht (Fig. 5) bzw. Draufsicht (Fig. 6) die sehr weit hinten liegende Anordnung der Lufteinläufe 18 mit den unmittelbar sich daran anschließenden ersten Krümmungsabschnitten 24.

In diesen Figuren ist gut erkennbar, wie die Mündung des Lufteinlaufes 18 auf ihrer Außenseite von einem nach vorne spitz zulaufenden Bereich des Korpus 12 begrenzt wird. Damit wird vorteilhaft eine gewisse Lauflänge für die einlaufende Luft vor Erreichen des Krümmungsabschnittes 24 geschaffen. Die beiden seitlichen Kanten der spitz zulaufenden Korpusbereiche sind im Hinblick auf die Verringerung der Radarsignatur wie aus Fig. 6 ersichtlich parallel zu den seitlich vorderen Tragflügelkanten orientiert.

Abweichend von dem dargestellten Ausführungsbeispiel könnte die Mündung des Lufteinlaufes 18 bzw. deren Kanten auch anders formgestaltet sein. Für eine geringe Radarsignatur günstig kann z. B. auch eine Orientierung der Mündungskanten parallel zu den hinteren (anstatt vorderen) Tragflügelkanten sein.

In Fig. 5 ist an dem Krümmungsabschnitt 24 außerdem eine ganz allgemein für im Rahmen der Erfindung vorgesehene Krümmungsabschnitte vorteilhafte Besonderheit zu erkennen. Diese besteht darin, dass der betreffende Krümmungsabschnitt (hier: Krümmungsabschnitt 24) für die Erzielung eines bestimmten Umlenkungswinkels ("Soll-Umlenkwinkel", hier: 180°) in einem ersten Verlaufsbereich eine Umlenkung um einen etwas größeren Winkel (hier: etwa 190°, allgemein z. B. um bis zu 20% größer als der "Soll-Umlenkwinkel") und in einem sich daran unmittelbar anschließenden zweiten Verlaufsbereich eine relativ kleine, entgegengesetzte Krümmung (hier: etwa -10°) vorsieht. (Diese Besonderheit ist auch in den schematischen Darstellungen der Fig. 7 bis 10 angedeutet). Damit kann unter bestimmten vertikalen Bauraumerfordernissen vorteilhaft der Strömungswiderstand gegenüber einer durchgehend gleichmäßigen Krümmung (z. B. halbkreisförmig zur Erzielung einer 180°-Krümmung) verringert werden.

Zusammenfassend ist bei dem Ausführungsbeispiel gemäß der Fig. 4 bis 6 im Unterschied zum Stand der Technik der Lufteinlauf 18 nach hinten verlagert, wohingegen das Strahltriebwerk 20 in umgekehrter Einbaulage (mit der Verdichter- bzw. Kompressorstufe hinten) nach vorne verlagert ist. Der Lufteinlauf 18 ist über einen speziell auf guten Wirkungsgrad ausgelegten 180°-Krümmer (erster Krümmungsabschnitt 24) mit dem Strahltriebwerk 20 verbunden. Die Triebwerksabgase gelangen über den weiteren 180°-Krümmer (zweiter Krümmungsabschnitt 28) in ein antiparallel zum Strahltriebwerk 20 verlaufendes Düsenrohr (Längsabschnitt 30). Bevorzugt ist die Schubdüse 22 (bzw. Kombination aus einzelnen Schubdüsen 22-1 und 22-2) wie dargestellt eine Flachdüse, bevorzugt mit Giervektorsteuerung.

In einer vorteilhaften Weiterbildung umfasst die Antriebsströmungspassage 16 in ihrem bis zum Strahltriebwerk 20 liegenden Bereich, also z. B. insbesondere im Bereich des Lufteinlaufes 18 wenigstens eine Luftabzweigung. Die an der betreffenden Stelle abgezweigte Luft kann z. B. zu Kühlzwecken vorgesehen sein. Alternativ oder zusätzlich kann diese Luft einem so genannten Ejektor im Bereich eines "Düsenrohrs" (Längsabschnitt 30) oder der Schubdüse 22 zugeführt werden. Hierfür kann eine (nicht dargestellte) Luftströmungspassage z. B. ausgehend vom Lufteinlauf 18 zur Schubdüse 22 verlaufen. Vorteilhaft ergibt sich eine relativ geringe Länge für eine solche Luftströmungspassage. Außerdem können damit eine geringe Radarsignatur beeinträchtigende Hilfslufteinläufe vermieden werden.

Mit der Erfindung können Fluggeräte mit extrem geringer Radarsignatur und dennoch vergleichsweise guten Flugeigenschaften realisiert werden. Insbesondere können z. B. folgende Vorteile erzielt werden:
- Der für die Signatur kritische Einlauf wird in den hinteren Bereich des Fluggerätes verlegt, wodurch er durch die Konfiguration (Korpus) selber von einfallenden Radarwellen weitgehend abgedeckt wird, besonders in dem wichtigen vorderen unteren Bereich.
- Gleichzeitig ist ein direkter Blick auf das Triebwerk verhindert.
- Die Baulänge des Einlaufes kann deutlich vergrößert werden und bietet im Gegensatz zum vorn liegenden Einlauf mehr Platz für radarabsorbierende Maßnahmen.
- Das spezifisch schwere Triebwerk kann weiter nach vorn verlagert werden, und der spezifisch leichte Einlauf nach hinten. Dies wirkt sich schwerpunktmäßig vorteilhaft aus und verbessert die Ausnutzung der Konfiguration sehr deutlich, wie oben beschrieben wurde.
- Die Seitenkräfte am Einlauf, die bei einer vorderen Lage zu einem instabilen Giermoment führen, besonders bei großen spezifischen Massendurchsätzen beim Start, erzeugen in diesem Falle eine Stabilisierung der Gierbewegung, wodurch die Konfiguration in der gesamten Flugenvelope zumindest leicht stabil ist. Dadurch reduziert sich das benötigte Giersteuerpotential und der Regleraufwand wesentlich.
- Kühlströme und Ejektoren für die Düse etc. (alles spezifisch leichte Komponenten) sollten bei signaturarmen Konfigurationen nicht über außen liegende Hilfeseinläufe sondern aus dem Triebwerkseinlauf versorgt werden. Bei einem hinten liegenden Einlauf sind die Zuleitungen sehr kurz.
- Bei richtiger Auslegung des 180°-Krümmers am Einlauf kann der Krümmerverlust klein gehalten werden, so dass auch der Einlaufwirkungsgrad gut ist.

Nachfolgend werden mit Bezug auf die Fig. 7 bis 10 beispielhaft einige Modifikationen der Anordnungsgeometrie im Bereich der Antriebsströmungspassage(n) erläutert.

Fig. 7 zeigt nochmals die prinzipielle Anordnungsgeometrie des bereits beschriebenen Ausführungsbeispiels der Fig. 4 bis 6. Bei dieser Ausführung sind in Querrichtung (y-Richtung) voneinander getrennt die zwei separaten Antriebsströmungspassagen 16-1 und 16-2 vorgesehen. Dementsprechend sind zwei Strahltriebwerke 20-1 und 20-2 vorgesehen. Diese sind jeweils "umgekehrt eingebaut", d. h. deren Triebwerkseingänge 32 liegen in Längsrichtung (x-Richtung) jeweils hinter deren Triebwerksausgängen 34 (siehe auch Fig. 4).

Die Fig. 8 bis 10 zeigen in einer der Fig. 7 entsprechenden schematischen Darstellung einige mögliche Modifikationen. Für gleichwirkende Komponenten sind hierbei die gleichen Bezugszahlen verwendet, jeweils ergänzt durch einen kleinen Buchstaben zur Unterscheidung der Ausführungsform. Bei der nachfolgenden Erläuterung wird im Wesentlichen nur auf die Unterschiede zu den bereits beschriebenen Ausführungsbeispielen eingegangen und im Übrigen hiermit ausdrücklich auf die Beschreibung vorangegangener Ausführungsbeispiele verwiesen.

Fig. 8 zeigt eine gegenüber Fig. 7 modifizierte Anordnungsgeometrie, bei welcher Strahltriebwerke 20a nicht im Bereich der ersten Längsabschnitte 26a sondern im Bereich der zweiten Längsabschnitte 30a angeordnet sind. Dementsprechend sind diese Strahltriebwerke 20a in "normaler Einbaulage" vorgesehen. Diese Modifikation ist hinsichtlich der Strömungsverluste im Allgemeinen ungünstiger als die Geometrie von Fig. 7, kann jedoch in bestimmten Anwendungsfällen auch Vorteile mit sich bringen.

Eine weitere mögliche Modifikation der Gestaltungen gemäß der Fig. 7 und 8 besteht darin, dass mehrere Antriebsströmungspassagen nicht vollständig separat ausgebildet sind sondern teilweise durch gemeinsam genutzte Komponenten. So könnte beispielsweise statt der in den Fig. 7 und 8 separat dargestellten zwei Schubdüsen alternativ auch eine einzige gemeinsam für die beiden Antriebsströmungspassagen genutzte Schubdüse vorgesehen sein, welche über eine Strömungszusammenführung ("Y-Stück") an die nach hinten verlaufenden Längsabschnitte 30-1 und 30-2 angeschlossen ist.

Fig. 9 veranschaulicht eine ähnliche Modifikation, bei welcher eine solche Strömungszusammenführung bereits unmittelbar nach zweiten Krümmungsabschnitten 28b-1 und 28b-2 angeordnet ist, die wiederum in ein gemeinsam genutztes Strahltriebwerk 20b mündet.

Fig. 10 zeigt eine weitere Modifikation gegenüber der Ausführungsform gemäß Fig. 7, bei welcher zweite Krümmungsabschnitte 28c-1 und 28c-2 wie bei Fig. 7 in der x-y-Ebene liegen, jedoch die Strömung in y-Richtung betrachtet nicht zur Fluggerätmitte hin sondern zum Fluggerätäußeren hin umlenken.

Alternativ oder zusätzlich zu den in den Fig. 7 bis 10 dargestellten "zweifachen" Antriebsströmungspassagen könnte das betreffende Fluggerät z. B. auch mit einer "einfachen" Antriebsströmungspassage ausgestattet werden.

Den Ausführungsformen gemäß der Fig. 7 bis 10 ist gemein, dass der erste Krümmungsabschnitt und der zweite Krümmungsabschnitt jeweils eine einachsig gekrümmte Strömungsumlenkung vorsehen. Dies ist jedoch keineswegs zwingend. Abweichend davon könnte der erste Krümmungsabschnitt und/oder der zweite Krümmungsabschnitt z. B. eine zweiachsige Krümmung vorsehen.

Außerdem ist den Ausführungsbeispielen gemäß der Fig. 7 bis 10 gemein, dass der erste Krümmungsabschnitt jeweils eine Krümmung in der vertikalen x-z-Ebene und der zweite Krümmungsabschnitt jeweils eine Krümmung in der horizontalen x-y-Ebene vorsieht. Auch dies ist nicht zwingend. Im Prinzip können die jeweiligen Krümmungsachsen (bzw. bei einer zweiachsigen Krümmung eine "Hauptkrümmungsachse") mehr oder weniger beliebig und weitgehend unabhängig voneinander vorgesehen sein. In einer speziellen Ausführungsform, abweichend von den Beispielen gemäß der Fig. 7 bis 10, ist beispielsweise vorgesehen, dass sowohl der erste Krümmungsabschnitt als auch der zweite Krümmungsabschnitt entweder im Wesentlichen eine Krümmung in x-z-Ebene oder eine Krümmung im Wesentlichen in der x-y-Ebene vorsehen.

Ganz allgemein ist lediglich wesentlich, dass die "Verkettung" aller Krümmungen einer Antriebsströmungspassage insgesamt dazu führt, dass die Luftströmung ausgehend von ihrer Orientierung in negativer x-Richtung (am Lufteinlauf) über einen teilweise gekrümmten Verlauf der Antriebsströmungspassage schließlich wieder in negativer x-Richtung orientiert den Fluggerätkorpus (an der oder den Schubdüsen) verlässt.

## Patentansprüche

1. Fluggerät mit einem Rumpf- und Tragflügelkorpus (12), einem Strahltriebwerk (20) und wenigstens einer Antriebsströmungspassage (16), die von einem an der Korpusoberfläche (14) nach vorne (+x) gerichteten Lufteinlauf (18) über das Strahltriebwerk (20) durch den Korpus (12) hindurch zu einer an der Korpusoberfläche (14) nach hinten (-x) ausmündenden Schubdüse (22) verläuft,
**dadurch gekennzeichnet, dass** wenigstens ein Teil des Strahltriebwerkes (20), insbesondere das ganze Strahltriebwerk (20), in Flugrichtung (+x) des Fluggerätes (10) betrachtet vor dem Lufteinlauf (18) angeordnet ist und die Antriebsströmungspassage (16) hierfür geeignet ausgebildete und angeordnete Krümmungsabschnitte (24, 28) aufweist.

2. Fluggerät nach Anspruch 1, wobei der Lufteinlauf (18) in Flugrichtung betrachtet hinter dem Massenschwerpunkt (M) des Fluggerätes (10) und/oder hinter dem geometrischen Flächenschwerpunkt (G) der von oben betrachteten Kontur des Korpus (12) angeordnet ist.

3. Fluggerät nach einem der vorangehenden Ansprüche, wobei die Mündung des Lufteinlaufes (18) auf ihrer Außenseite von einem nach vorne sich verjüngenden, beispielsweise spitz zulaufenden Bereich des Korpus (12) begrenzt ist.

4. Fluggerät nach einem der vorangehenden Ansprüche, wobei die Antriebsströmungspassage (16) wenigstens zum Teil zweifach, symmetrisch zu einer vertikalen Längsmittelebene des Korpus (12) ausgebildet ist.

5. Fluggerät nach einem der vorangehenden Ansprüche, wobei die Antriebsströmungspassage (16) umfasst:
- einen sich an den Lufteinlauf (18) anschießenden ersten Krümmungsabschnitt (24) zur Strömungsumlenkung,
- einen sich an den ersten Krümmungsabschnitt (24) anschließenden und in Flugrichtung (+x) erstreckenden ersten Längsabschnitt (26) zur Strömungsführung,
- einen sich an den ersten Längsabschnitt (26) anschließenden zweiten Krümmungsabschnitt (28) zur Strömungsumlenkung, und
- einen sich an den zweiten Krümmungsabschnitt (28) anschließenden und entgegen der Flugrichtung (-x) erstreckenden zweiten Längsabschnitt (30) zur Strömungsführung.

6. Fluggerät nach Anspruch 5, wobei der erste Längsabschnitt (26) das Strahltriebwerk (20) enthält.

7. Fluggerät nach einem der vorangehenden Ansprüche, wobei wenigstens ein Teil des Strahltriebwerkes (20), insbesondere das ganze Strahltriebwerk (20), in Flugrichtung (+x) betrachtet vor dem Massenschwerpunkt (M) des Fluggerätes und/oder vor dem geometrischen Flächenschwerpunkt (G) der von oben betrachteten Kontur des Korpus (12) angeordnet ist.

8. Fluggerät nach einem der vorangehenden Ansprüche, wobei wenigstens einer der Krümmungsabschnitte (24, 28) einen ersten Verlaufsbereich zur Strömungsumlenkung um einen bestimmten ersten Winkel und einen sich unmittelbar daran anschließenden zweiten Verlaufsbereich mit entgegengesetzter Krümmungsrichtung zur Strömungsumlenkung um einen zweiten Winkel aufweist, der kleiner als der erste Winkel ist.

## Claims

1. Aircraft having a fuselage and wing body (12), a jet engine (20) and at least one propulsion flow duct (16) which runs from an air intake (18), which is on the body upper surface (14) and faces forwards (+x), via the jet engine (20) through the body (12) to a thrust nozzle (22), which is on the body upper surface (14) and opens rearwards (-x),
**characterized in that** at least part of the jet engine (20), in particular the entire jet engine (20), is arranged forward of the air intake (18) as seen in the direction of flight (+x) of the aircraft (10) and the propulsion flow duct (16) has curved sections (24, 28) which are designed and arranged suitably for this.

2. Aircraft according to Claim 1, wherein, as seen in the direction of flight, the air intake (18) is arranged aft of the centre of mass (M) of the aircraft (10) and/or aft of the geometric area centroid (G) of the contour of the body (12) as seen from above.

3. Aircraft according to either of the preceding claims, wherein the mouth of the air intake (18) is bounded on its outer side by a region of the body (12) which narrows, and for example narrows to a point, in the forward direction.

4. Aircraft according to one of the preceding claims, wherein the propulsion flow duct (16) is at least in part of twin configuration, symmetrically with respect to a vertical longitudinal central plane of the body (12).

5. Aircraft according to one of the preceding claims, wherein the propulsion flow duct (16) comprises:
- a first curved section (24), which adjoins the air intake (18), for diverting the flow,
- a first longitudinal section .(26), which adjoins the first curved section (24) and extends in the direction of flight (+x), for guiding the flow,
- a second curved section (28), which adjoins the first longitudinal section (26), for diverting the flow, and
- a second longitudinal section (30), which adjoins the second curved section (28) and extends counter to the direction of flight (-x), for guiding the flow.

6. Aircraft according to Claim 5, wherein the first longitudinal section (26) contains the jet engine (20).

7. Aircraft according to one of the preceding claims, wherein, as seen in the direction of flight (+x), at least part of the jet engine (20), in particular the entire jet engine (20), is arranged forward of the centre of mass (M) of the aircraft and/or forward of the geometric area centroid (G) of the contour of the body (12) as seen from above.

8. Aircraft according to one of the preceding claims, wherein at least one of the curved sections (24, 28) has a first profile region for diverting the flow by a determined first angle and has a second profile region, directly adjoining the first, of opposite direction of curvature for diverting the flow by a second angle which is smaller than the first angle.

## Revendications

1. Aéronef comprenant un corps de fuselage et d'aile portante (12), un turboréacteur (20) et au moins un passage d'écoulement d'entraînement (16), qui s'étend depuis une entrée d'air (18) orientée vers l'avant (+x) au niveau de la surface du corps (14) au-dessus du turboréacteur (20) à travers le corps (12) jusqu'à une tuyère d'éjection (22) débouchant au niveau de la surface du corps (14) vers l'arrière (-x),
**caractérisé en ce qu'**au moins une partie du turboréacteur (20), en particulier la totalité du turboréacteur (20), vue dans la direction de vol (+x) de l'aéronef (10), est disposée avant l'entrée d'air (18) et le passage d'écoulement d'entraînement (16) présente des sections courbes (24, 28) réalisées et disposées de manière appropriée à cet effet.

2. Aéronef selon la revendication 1, dans lequel l'entrée d'air (18), vue dans la direction de vol, est disposée derrière le centre de gravité de masse (M) de l'aéronef (10) et/ou derrière le centre de gravité de surface géométrique (G) du contour du corps (12), vu de dessus.

3. Aéronef selon l'une quelconque des revendications précédentes, dans lequel l'embouchure de l'entrée d'air (18) est limitée sur son côté extérieur par une région du corps (12) se rétrécissant vers l'avant, par exemple se terminant en pointe.

4. Aéronef selon l'une quelconque des revendications précédentes, dans lequel le passage d'écoulement d'entraînement (16) est réalisé au moins en partie sous forme double, symétrique par rapport à un plan médian longitudinal vertical du corps (12).

5. Aéronef selon l'une quelconque des revendications précédentes, dans lequel le passage d'écoulement d'entraînement (16) comprend :
- une première section courbe (24) se raccordant à l'entrée d'air (18) pour dévier l'écoulement,
- une première section longitudinale (26) se raccordant à la première section courbe (24) et s'étendant dans la direction de vol (+x) pour guider l'écoulement,
- une deuxième section courbe (28) se raccordant à la première section longitudinale (26) pour dévier l'écoulement, et
- une deuxième section longitudinale (30) se raccordant à la deuxième section courbe (28) et s'étendant dans le sens opposé à la direction de vol (-x) pour guider l'écoulement.

6. Aéronef selon la revendication 5, dans lequel la première section longitudinale (26) contient le turboréacteur (20).

7. Aéronef selon l'une quelconque des revendications précédentes, dans lequel au moins une partie du turboréacteur (20), notamment la totalité du turboréacteur (20), vue dans la direction de vol (+x), est disposée avant le centre de gravité de masse (M) de l'aéronef et/ou avant le centre de gravité de surface géométrique (G) du contour du corps (12), vu de dessus.

8. Aéronef selon l'une quelconque des revendications précédentes, dans lequel au moins l'une des sections courbes (24, 28) présente une première région d'étendue pour dévier l'écoulement d'un premier angle déterminé et une deuxième région d'étendue s'y raccordant directement avec un sens de courbure opposé pour dévier l'écoulement suivant un deuxième angle inférieur au premier angle.
